# EUROPÄISCHE PATENTANMELDUNG

(11) **EP 1 160 755 A2**
(43) Veröffentlichungstag der Anmeldung: **05.12.2001**
(21) Anmeldenummer: 01106210.6
(22) Anmeldetag: 14.03.2001
(51) Int. Cl.: G09B 29/10

(54) **Verfahren zur positionsabhängigen Darstellung von einer digitalen Karte**

(30) Priorität: 26.05.2000 DE 10025776
(71) Anmelder: ROBERT BOSCH GMBH, 70442 Stuttgart (DE)
(72) Erfinder: Buecher, Andreas, 37520 Osterode (DE); Draeger, Gerd, 38102 Braunschweig (DE); Wanschura, Matthias, 30175 Hannover (DE); Kersken, Ulrich, 31199 Diekholzen (DE)

(57) **Zusammenfassung**

Es wird ein Verfahren zur positionsabhängigen Darstellung von einer digitalen Karte vorgeschlagen, das dazu dient, mit einer Vorrichtung eine digitale Karte anhand einer eingegebenen Position auszuwählen und darzustellen. Verläßt die Vorrichtung das dargestellte Gebiet wird zur nächsten digitalen Karte umgeschaltet. Zusätzliche Informationen werden auf der digitalen Karte dargestellt, falls deren Koordinaten in das dargestellte Gebiet passen. Der Maßstab der digitalen Karte ist mittels einer Eingabevorrichtung wählbar und darüber hinaus welche Art von Informationen auf der digitalen Karte dargestellt werden sollen. Die digitale Karte kann vorteilhafterweise als Bilddatei übertragen werden.

## Beschreibung

### Stand der Technik

Die Erfindung geht aus von einem Verfahren zur positionsabhängigen Darstellung von einer digitalen Karte nach der Gattung des unabhängigen Patentanspruchs.

Es ist bereits bekannt, dass digitale Karten zur Orientierungshilfe verwendet werden und aktuelle Informationen auf einer Vorrichtung, beispielsweise der Anzeige eines Autoradios oder eines Navigationsgeräts dargestellt werden. Dabei werden Vektorgrafiken verwendet. Weiterhin ist es bekannt, dass Vorrichtungen zur Orientierungshilfe Mittel zur Standortbestimmung, beispielsweise einer Ortungsvorrichtung, aufweisen.

### Vorteile der Erfindung

Das erfindungsgemäße Verfahren zur positionsabhängigen Darstellung von einer digitalen Karte mit den Merkmalen des unabhängigen Patentanspruchs hat demgegenüber den Vorteil, dass für eine eingegebene Position eine digitale Karte automatisch ausgewählt und dargestellt wird. Dadurch verschwindet der Suchaufwand für den Benutzer, es wird also ein Informationsfilter realisiert. Anhand der dargestellten digitalen Karte kann dann der Benutzer Entscheidungen bezüglich seines Weges treffen. Außerdem wird mittels der Bilddatei eine einfache Form der Darstellung gewählt, wobei ein Prozessor den Inhalt einer Datei, vorzugsweise einer Bilddatei, ohne Vorgaben auf die vorhandene Anzeige anpaßt und darstellt.

Durch die in den abhängigen Ansprüchen aufgeführten Maßnahmen und Weiterbildungen sind vorteilhafte Verbesserungen des im unabhängigen Patentanspruch angegebenen Verfahrens zur positionsabhängigen Darstellung von einer digitalen Karte möglich.

Es ist von Vorteil, dass ein automatisches Weiterschalten auf eine gültige digitale Karte vorgenommen wird, falls der Standort der Vorrichtung im Begriff ist, das von der ersten digitalen Karte dargestellte Gebiet zu verlassen. Damit wird dem Benutzer automatisch eine gültige digitale Karte dargestellt, was insbesondere für Ortsunkundige und für Autofahrer von Vorteil ist. Dabei ist es auch von Vorteil, dass sich die von den digitalen Karten dargestellten Gebiete überlappen, so dass der Standort sich nicht am äußersten Rand des dargestellten Gebiets befinden muß.

Darüber hinaus ist es von Vorteil, dass ein Benutzer der Vorrichtung, mit der das erfindungsgemäße Verfahren durchgeführt wird, aktuelle Informationen für das Gebiet seiner digitalen Karte erhält und auf der digitalen Karte dargestellt bekommt, so dass er selbst dann einen geeigneten Weg in Abhängigkeit von den dargestellten Informationen zu seinem Ziel bestimmen kann. Diese aktuellen Informationen betreffen insbesondere Verkehrsinformationen wie Staus oder andere Hindernisse, ein Benutzers erkennt also, ob wo Hindernisse vor ihm liegen. Auch Raststätten und touristisch wichtige Orte (Points of Interest =POI) sind dabei angegeben. Damit wird mittels des erfindungsgemäßen Verfahrens eine einfache Wegplanung mit sehr geringem Aufwand ermöglicht.

Besonders vorteilhaft ist, dass der Standort entweder mit einer Ortungsvorrichtung oder mittels einer Eingabe durch einen Benutzer festgestellt wird. Damit können Vorrichtungen je nach Wunsch des Benutzers eingerichtet werden, so dass der Benutzer entweder auf eine automatische Standortbestimmung mit der Ortungsvorrichtung oder auf seine eigene Kenntnis seines Standorts oder seines Ziels zurückgreift.

Weiterhin ist es von Vorteil, dass die digitale Karte in verschiedenen Maßstäben darstellbar ist, die durch den Benutzer gewählt werden, wobei eine Standardeinstellung für den Maßstab vorliegt. Dies ist eine komfortable Möglichkeit für einen Benutzer, eine Auflösung der digitalen Karte nach seinen Wünschen und Bedürfnissen zu wählen. Der Maßstab bestimmt auch, welche Informationen auf der digitalen Karte letztlich dargestellt werden.

Es ist weiterhin von Vorteil, dass der aktuelle Standort der Vorrichtung mit dem Empfänger auf der digitalen Karte dargestellt wird, so dass ein Benutzer visuell die aktuelle Situation in Abhängigkeit von den positionsabhängigen Informationen und seinem Standort und dem Ziel aufnehmen kann. Dadurch wird eine schnelle Bewertung der Lage ermöglicht. Damit kann dann ein Benutzer selbständig einen für ihn optimalen Weg finden. Dies nutzt vorteilhafterweise die weitgehenden Möglichkeiten der Mustererkennung einer Person, so dass die Routenberechnung mit der Ausgabe von Hinweisen zur Fahrt eingespart wird.

Vorteilhafterweise wird durch ein Datenfeld in den übertragenen Informationen signalisiert, um welche Art von Daten es sich dabei handelt. Dabei kann es sich um Staukarten, Textseiten, andere Verkehrsmeldungen oder Klangdateien handeln. Je nachdem, welche Dateien vorliegen, wird die Vorrichtung, die das erfindungsgemäße Verfahren durchführt, eine entsprechende Verarbeitung dieser Daten vornehmen. Für eine Klangdatei ist ein entsprechender Audiodekodieralgorithmus zu verwenden und eine akustische Wiedergabe einzusetzen, während für visuell darstellbare Informationen die Anzeige anzusteuern ist.

Darüber hinaus ist es von Vorteil, dass der Benutzer durch Eingaben herausfiltert, welche Art von Informationen er dargestellt haben möchte. Damit schränkt der Benutzer ein, dass einige Informationen, die Koordinaten auf der aktuell dargestellten digitalen Karte aufweisen, nicht dargestellt werden, falls dies der Benutzer so wünscht. Damit wird ein geeigneter Informationsfilter realisiert. Beispielsweise können neben Verkehrsinformationen auch Veranstaltungshinweise empfangen werden, wobei dann der Benutzer wählt, ob er nur Verkehrsinformationen oder nur Veranstaltungsinformationen oder beide Informationen auf der digitalen Karte ausgegeben haben möchte. Dafür weisen die übertragenen Informationen vorteilhafterweise Felder auf, die indizieren, um welche Art der Information es sich handelt.

Schließlich ist es auch von Vorteil, dass eine Vorrichtung zur Durchführung des erfindungsgemäßen Verfahrens vorliegt, die die entsprechenden Komponenten wie einen Empfänger, einen Prozessor, eine Anzeige, einen Speicher und gegebenenfalls eine Ortungsvorrichtung und einen Lautsprecher aufweist.

### Zeichnung

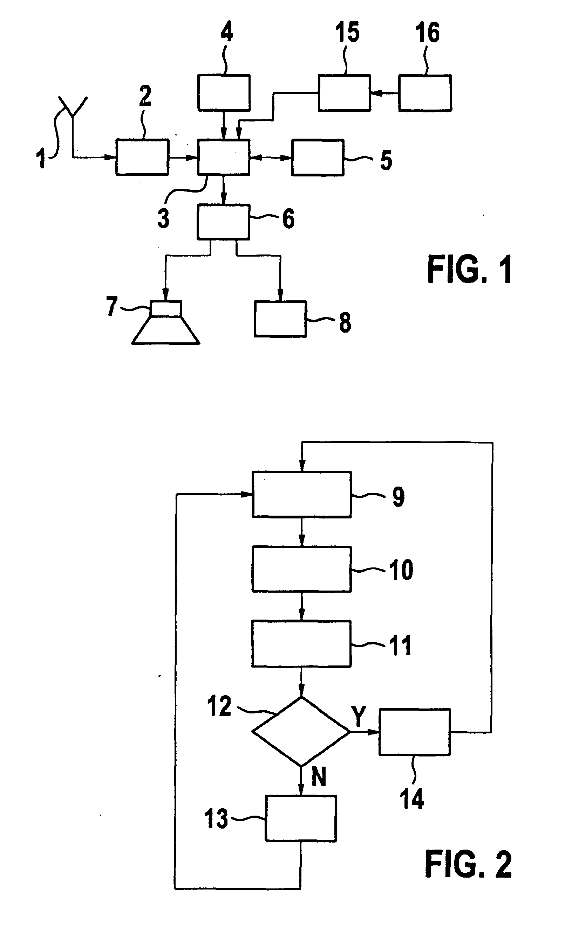

Ausführungsbeispiele der Erfindung sind in der Zeichnung dargestellt und werden in der nachfolgenden Beschreibung näher erläutert. Figur 1 zeigt ein Blockschaltbild der Vorrichtung zur Durchführung des erfindungsgemäßen Verfahrens und Figur 2 ein Flußdiagramm des erfindungsgemäßen Verfahrens.

### Beschreibung

Navigationsgeräte weisen entweder einen Prozessor auf, um eine Route zu berechnen, die dann von dem Navigationsgerät gegebenenfalls in Fahrhinweise übersetzt werden, oder die Route wird auf einem Zentralrechner berechnet, nachdem von dem Navigationsgerät über einen Funkkanal angegeben worden war, wohin die Fahrt gehen soll, wobei dann ein Rückkanal notwendig ist, um die Daten wieder zum Empfänger zurück zu versenden. Dabei wird ein Benutzer einen Mobilfunkkanal verwenden, um sein Ziel und seinen Standort anzugeben und gegebenenfalls wird dann ebenfalls über den Mobilfunkkanal die berechnete Route zurückübertragen.

Diese Methoden stellen eine aufwendige Realisierung der Navigation dar, deshalb wird erfindungsgemäß ein Verfahren eingesetzt, mittels dessen automatisch eine für eine vorgegebene Position gültige digitale Karte dargestellt wird, die über digitale Funksignale empfangen wurde. Durch ein automatisches Weiterblättern auf eine neue digitale Karte wird verhindert, dass ein Benutzer eine für seinen Standort ungültige digitale Karte dargestellt bekommt. Die digitalen Karten überlappen sich, so dass ein Standort nicht ganz am Rand der digitalen Karte dargestellt werden muß. Weiterhin werden auf der digitalen Karte positionsbezogene Informationen wie Staus dargestellt. Auch diese Informationen werden mittels digitaler Funksignale empfangen. Dabei muß das von der digitalen Karte dargestellte Gebiet die Koordinaten von den Informationen umfassen. Durch eine Darstellung des Standorts der erfindungsgemäßen Vorrichtung und der dargestellten Informationen ist es einem Benutzer leicht möglich, einen Weg für sich optimal festzulegen. Die digitale Karte wird ebenfalls als Bilddatei, also als Bitmap, über die digitalen Funksignale empfangen. Durch die Kennzeichnung der darzustellenden Informationen und dadurch, dass der Benutzer vorgeben kann, welche Art von Informationen er dargestellt haben möchte, wird ein effizienter Informationsfilter ermöglicht.

In Figur 1 ist als Blockschaltbild die Vorrichtung zur Durchführung des erfindungsgemäßen Verfahrens dargestellt. Eine Antenne 1 ist an einen Eingang eines Empfängers 2 angeschlossen. Der Empfänger 2 ist an einen ersten Dateneingang eines Prozessors 3 angeschlossen. An einen zweiten Dateneingang des Prozessors 3 ist die Ortungsvorrichtung 4 angeschlossen. An einen dritten Dateneingang des Prozessors 3 ist eine Signalverarbeitung 15 angeschlossen. An einen Datenein-/-ausgang des Prozessors 3 ist ein Speicher 5 angeschlossen. An einen Datenausgang des Prozessors 3 ist eine Signalverarbeitung 6 angeschlossen. An einen Dateneingang der Signalverarbeitung 15 ist eine Eingabevorrichtung 16 angeschlossen. Eine Anzeige 8 ist an einen ersten Ausgang der Signalverarbeitung 6 angeschlossen, während an den zweiten Ausgang der Signalverarbeitung 6 ein Lautsprecher 7 mit Audioverstärker angeschlossen ist.

Die digitalen Funksignale, hier sind es digitale Rundfunksignale, werden mittels der Antenne 1 empfangen und vom Empfänger 2 verarbeitet. Der Empfänger 2 verstärkt, filtert und setzt diese digitalen Rundfunksignale in eine Zwischenfrequenz um. Weiterhin digitalisiert der Empfänger 2 die empfangenen Rundfunksignale.

Es wird hier ein DAB-Empfänger als der Empfänger 2 verwendet, wobei DAB (Digital Audio Broadcasting) ein digitales Rundfunkübertragungsverfahren ist. Es ermöglicht durch seine Dateistruktur die Übertragung von verschiedenen Dateiformaten, die in ihren Größen stark variieren können. Dazu wird das bekannte MOT (Multimedia Object)-Protokoll verwendet. Damit sind also die Übertragungen von Daten zur Erstellung von digitalen Karten und darzustellenden Informationen verschiedener Formate (Text, Grafik, Video, Audio) möglich. Alternativ ist es auch möglich, andere digitale Rundfunkübertragungsverfahren wie DVB (Digital Video Broadcasting) oder DRM (Digital Radio Mondial) zu verwenden. Aber auch ein digitaler Träger, der mit UKW-Rundfunksignalen mit übertragen wird (TMC, RDS) sind hier einsetzbar.

Weiterhin ist es möglich, anstatt eines Broadcast-Verfahrens, wie es digitale Rundfunkverfahren sind, auch Mobilfunkverfahren wie GSM (Global System for Mobile Communication) oder UMTS (Universal Mobile Telecommunication System) zu verwenden. Broadcast-Systeme haben jedoch den Vorteil, dass keine Übertragungsgebühren zu bezahlen sind. Außerdem ist es hier leichter möglich, eine Vielzahl von Teilnehmern zu erreichen. Als Nutzdaten sind in den digitalen Rundfunksignalen die standortabhängigen Informationen und die digitalen Karten als Dateien enthalten. Es ist auch möglich, eine Kombination von Broadcast- und Mobilfunksystemen zu verwenden.

Von dem Empfänger 2 werden dann diese Dateien zu dem Prozessor 3 übertragen. Diesen Dateien werden dann im Speicher 5 abgespeichert oder sofort weiterverarbeitet.

Abspeicherte Dateien, die darzustellende Informationen betreffen, werden vorteilhafterweise in Tabellen abgelegt, die so sortiert sind, dass sie nach ihren Koordinaten abrufbar sind. Beispielsweise werden dann alle Informationen, die auf einer digitalen Karte darstellbar sind, daraufhin untersucht, ob die Koordinaten, bei denen diese Informationen dargestellt werden sollen, sich auf dieser digitalen Karte befinden. Dies kann beispielsweise durch ein zeilenweises Vergleichen der Koordinaten der digitalen Karte mit den Koordinaten der abgespeicherten Informationen geschehen. Auch die digitalen Karten werden im Speicher 5 geordnet, so dass wenn das Gebiet einer digitalen Karte verlassen wird, die nächste aus dem Speicher 5 geladen wird. Die digitalen Karten, die für verschiedene Maßstäbe vorliegen, werden entweder schon von Anfang an in den Speicher 5 von einem Hersteller gespeichert, oder sie werden mittels der digitalen Rundfunksignale empfangen und temporär speichert. Für eine temporäre Speicherung der Informationen werden die Informationen mit einem Zähler versehen, um sie nach einer bestimmten Speicherzeit zu löschen, während die digitalen Karten ab einer bestimmten Entfernung gelöscht werden können. Befindet sich beispielsweise ein Benutzer auf einer Reise im Ausland, dann benötigt er nur dort die entsprechenden digitalen Karten, während er nach seiner Rückkehr diese digitalen Karten für eine lange Zeit eventuell nicht mehr braucht.

Der Prozessor 3, auf dem das erfindungsgemäße Verfahren hauptsächlich abläuft, erhält von der Ortungsvorrichtung 4 den aktuellen Standort der Vorrichtung. Die Ortungsvorrichtung 4 ist hier als GPS (Global Positioning System)-Empfänger ausgebildet, der aus den GPS-Sigalen den Standort als Koordinatenpaar bestimmt und dieses Koordinatenpaar an den Prozessor 3 überträgt. Der Prozessor 3 erhält über die Signalverarbeitung 15 von der Eingabevorrichtung 16, die hier als Tastatur ausgebildet ist, die Daten, welchen Maßstab der Benutzer für die digitale Karte wünscht und welche Art von Informationen der Benutzer auf der digitalen Karte zusätzlich eingeblendet haben möchte. Durch eine Voreinstellung werden ein Maßstab, der üblicherweise besonders häufig Anwendung findet, und alle Arten von Informationen zur Darstellung festgelegt. Es ist hier auch möglich, dass der Benutzer direkt ein Ziel oder seinen Standort eingibt. Durch einen Schalter kann der Benutzer bestimmen, ob eine automatische Anpassung der digitalen Karte in Abhängigkeit von seinem Standort vorgenommen wird oder nicht.

Anhand der Eingabedaten oder der Voreinstellungen wählt der Prozessor 3 entweder aus dem Speicher 5 oder direkt aus den empfangenen Dateien aus den digitalen Rundfunksignalen die entsprechende digitale Karte aus und überträgt diese Daten an die Signalverarbeitung 6. Die Signalverarbeitung 6 bereitet die Daten der digitalen Karte auf die Darstellung mittels der Anzeige 8 vor. Da es sich um eine Bilddatei, also ein Bitmap handelt, wird die Bilddatei, so wie ist dargestellt.

Die Anzeige 8 liegt hier als Plasmabildschirm vor, wobei andere geeignete Arten von Anzeigen verwendbar sind. Dann überträgt die Signalverarbeitung 6 diese vorbereiteten Daten an die Anzeige 8, die dann diese digitale Karte darstellt.

Ein Benutzer kann zu jeder Zeit mittels der Eingabevorrichtung 16 den Maßstab der digitalen Karte ändern, wodurch sich auch gegebenenfalls die Anzahl der darzustellenden Informationen ändern. Dies hängt daran, dass sich dann die Koordinaten von Informationen mit dem Bereich der digitalen Karte überlappen oder nicht mehr überlappen.

Nachdem die digitale Karte auf der Anzeige 8 dargestellt wurde, wird vom Prozessor 3 eine Auswertung der in den digitalen Rundfunksignalen oder im Speicher 5 enthaltenen Informationen mit ihren Koordinaten vorgenommen. Der Prozessor 3 vergleicht nun diese Koordinaten mit den Koordinaten der aktuell dargestellten digitalen Karte. Eine digitale Karte wird als Rechteck definiert, dass mittels zweier Koordinatenpaare in seinen Abmessungen definiert ist. Liegen die Koordinaten der Information im Gebiet der digitalen Karte, dann werden die Informationen auf der digitalen Karte dargestellt. Dazu überträgt dann der Prozessor 3 die Informationen an die Signalverarbeitung 6 mit den Koordinaten, wo die Informationen darzustellen sind. Darüber hinaus reagiert der Prozessor 3 sofort auf eine Eingabe durch den Benutzer, falls eine Art von Informationen nicht mehr dargestellt werden soll oder wieder dargestellt werden soll.

Handelt es sich bei den darzustellenden Informationen um Klangdateien, dann werden diese von der Signalverarbeitung 6 für die Wiedergabe mittels des Lautsprechers 7 vorbereitet und dann an den Lautsprecher 7 zur Wiedergabe übertragen.

Verändert sich der Standort der Vorrichtung, dann überprüft der Prozessor 3, ob die digitale Karte, die auf der Anzeige 8 dargestellt wird, noch diesen Standort enthält. Droht die Vorrichtung den Geltungsbereich der digitalen Karte zu verlassen, dann wechselt der Prozessor 3 auf eine Karte, die sich an die dargestellte digitale Karte anschließt zur neuen Darstellung auf der Anzeige 8. Dies wird so vorgenommen, dass, wenn sich der Standort der Vorrichtung dem Rand der aktuellen digitalen Karte nähert, ab einem bestimmten Abstand von dem Rand auf die nächste digitale Karte gesprungen wird, wobei die nächste folgende digitale Karte sich mit der aktuellen digitalen Karte überlappt, so dass der Standort nicht direkt am Rand der Anzeige 8 abgebildet wird, was für die Einblendung von Informationen sich als nachteilig erweist.

Diese neue digitale Karte wird entweder aus dem Speicher 5 geladen oder direkt aus den empfangenen Rundfunksignalen entnommen. Digitale Karten und Informationen werden im Speicher 5 zwischengespeichert, um bei einem Wechsel der Karte für die Darstellung zur Verfügung zu stehen. Dabei wird den abgespeicherten Informationen ein Zeitfaktor zugeordnet, nach dem diese Informationen aus dem Speicher gelöscht werden. Da hier als darzustellende Informationen, insbesondere Verkehrsinformationen, verwendet werden, sind diese Verkehrsinformationen nach einer vorgegebenen Zeit als obsolet zu betrachten.

Im Flußdiagramm in Figur 2 wird das erfindungsgemäße Verfahren dargestellt. In Verfahrensschritt 9 bestimmt die erfindungsgemäße Vorrichtung mittels der Ortungsvorrichtung 4 seinen Standort. Alternativ ist es möglich, dass mittels der Eingabevorrichtung 16 ein Benutzer seinen Standort direkt eingibt. In Verfahrensschritt 10 wählt der Prozessor 3 für diesen Standort eine nach den Vorgaben des Benutzers bezüglich des Maßstabes geeignete Karte aus dem Speicher 5 aus. Diese Karte wird dann auf der Anzeige 8 dargestellt. In Verfahrensschritt 11 empfängt die erfindungsgemäße Vorrichtung die Informationen mit dem zugehörigen Koordinaten, und der Prozessor 3 sorgt dafür, dass der aktuelle Standort der Vorrichtung auf der digitalen Karte zusätzlich eingeblendet wird. Dazu wird ein entsprechendes Bildelement aus dem Speicher 5 geladen und auf der digitalen Karte dargestellt. Die entsprechenden Koordinaten sind ebenfalls im Speicher 5 abgelegt. Solch ein Bildelement ist z.B. die bildliche Repräsentation eines Fahrzeugs.

In Verfahrensschritt 12 überprüft der Prozessor 3, ob die Koordinaten der empfangenen und im Speicher 5 abgespeicherten Informationen im von der digitalen Karte dargestellten Gebiet liegen. Ist dies der Fall, dann wird in Verfahrensschritt 14 eine Einblendung dieser Informationen vorgenommen und zwar auf der digitalen Karte. Dazu werden entsprechend dem Inhalt der Dateien dieser Informationen Text oder Bilder auf der digitalen Karte an den angegebenen Standorten zusätzlich eingeblendet. Dabei ist es möglich, dass die Informationen, die mit den digitalen Rundfunksignalen übertragen werden, reine Textinformationen sind und mit Bildelementen, die im Speicher 5 bereits abgelegt sind, verknüpft werden, so dass bei einem Auftauchen dieser Informationen diese entsprechenden Bildelemente diesen Textinformationen zugeordnet werden und dann auf der Anzeige 8 in der digitalen Karte dargestellt werden.

Nach Verfahrensschritt 14 wird erneut der Standort der Vorrichtung bestimmt, um festzustellen, ob die aktuell verwendete digitale Karte noch stimmt. Dabei kann auch ein Unterschreiten eines Abstandes zum Rand der digitalen Karte dazu verwendet werden, direkt auf eine neue, sich anschließende digitale Karte umzuschalten.

Wurde in Verfahrensschritt 12 festgestellt, dass keine Information mit ihren Koordinaten in das Gebiet der digitalen Karte hineinfällt, dann wird in Verfahrensschritt 13 keine Information eingeblendet, und es wird mit Verfahrensschritt 9 mit der Bestimmung des augenblicklichen Standortes der Vorrichtung fortgefahren.

Die digitalen Karten und die Informationen können auch mittels einer Kombination von verschiedenen digitalen Übertragungsverfahren empfangen werden. Beispielsweise können die digitalen Karten mittels eines Broadcastsystems übertragen werden und die Informationen mittels eines Mobilfunksystems.

## Patentansprüche

1. Verfahren zur positionsabhängigen Darstellung von einer digitalen Karte, wobei eine Vorrichtung digitale Karten als Dateien in digitalen Funksignalen mit Koordinaten, die das von der jeweiligen digitalen Karte dargestellte Gebiet definieren, mit einem Empfänger (2) empfängt und zwischenspeichert, **dadurch gekennzeichnet, dass** die Vorrichtung anhand einer eingegebenen oder ermittelten Position eine erste digitale Karte auswählt und darstellt, wobei die Vorrichtung die Koordinaten der digitalen Karte für die Darstellung auf einer Anzeige (8) umrechnet.

2. Verfahren nach Anspruch 1, **dadurch gekennzeichnet, dass** die Vorrichtung ihren Standort ermittelt und dass, falls die aktuelle Position der Vorrichtung sich am Rand des Gebiets befindet, das die erste digitale Karte darstellt, die Vorrichtung eine zweite digitale Karte auswählt und darstellt.

3. Verfahren nach Anspruch 2, **dadurch gekennzeichnet, dass** die das von der zweiten digitalen Karte dargestellte Gebiet sich mit dem Gebiet der ersten digitalen Karte überlappt.

4. Verfahren nach Anspruch 1, 2 oder 3, **dadurch gekennzeichnet, dass** die Vorrichtung Informationen mit Koordinaten, an denen die Informationen darzustellen sind, in den digitalen Funksignalen mit dem Empfänger (2) empfängt, dass die Informationen auf der digitalen Karte dargestellt werden, sofern die Koordinaten der Informationen innerhalb des von der digitalen Karte definierten Gebiets liegen.

5. Verfahren nach Anspruch 3 oder 4, **dadurch gekennzeichnet, dass** der Standort der Vorrichtung mittels einer Ortungsvorrichtung (4) oder durch Eingabe bestimmt wird.

6. Verfahren nach Anspruch 1, 2, 3, 4 oder 5, **dadurch gekennzeichnet, dass** die digitale Karte mit verschiedenen Maßstäben dargestellt wird.

7. Verfahren nach Anspruch 6, **dadurch gekennzeichnet, dass** der Maßstab an der Vorrichtung gewählt wird.

8. Verfahren nach einem der vorhergehenden Ansprüche, **dadurch gekennzeichnet, dass** der Standort der Vorrichtung und/oder die eingegebene oder ermittelte Position, beispielsweise Ziel, auf der digitalen Karte dargestellt werden.

9. Verfahren nach einem der vorhergehenden Ansprüche, **dadurch gekennzeichnet, dass** mittels Daten in den Informationen erkannt wird, welcher Art die Informationen sind und wie die Informationen darzustellen sind.

10. Verfahren nach Anspruch 8, **dadurch gekennzeichnet, dass** eingegeben wird, welche Art von Information darzustellen ist.

11. Vorrichtung zur Durchführung des Verfahrens nach einem der Ansprüche 1 bis 9, **dadurch gekennzeichnet, dass** die Vorrichtung den Empfänger (2), die Ortungsvorrichtung (4), eine Eingabevorrichtung (16), einen Prozessor (3), die Anzeige (8) und gegebenenfalls Mittel zur akustischen Wiedergabe (7) aufweist.
